# EUROPÄISCHE PATENTANMELDUNG

(11) **EP 1 145 876 A1**
(43) Veröffentlichungstag der Anmeldung: **17.10.2001**
(21) Anmeldenummer: 01108830.9
(22) Anmeldetag: 09.04.2001
(51) Int. Cl.: B60D 1/54

(54) **Anhängerkupplung für Kfz**

(30) Priorität: 10.04.2000 DE 10017320
(71) Anmelder: PEKA Fahrzeugbau GmbH & Co, 76185 Karlsruhe (DE)
(72) Erfinder: Rimmelspacher, Bernhard, 76287 Rheinstetten (DE)
(74) Vertreter: Schuster, Gregor, Dipl.-Ing.

(57) **Zusammenfassung**

Es wird eine Anhängerkupplung für Kraftfahrzeuge vorgeschlagen mit einer in einem Kupplungsträger (3) verstellbar angeordneten Kugelstange (1), die sich aus einer Arbeitsstellung in eine Ruhestellung verdrehen und dort über einen Querbolzen (11) arretieren lässt.

## Beschreibung

### Stand der Technik

Die Erfindung geht aus von einer Anhängerkupplung für Kraftfahrzeuge mit einer Kugelstange, die willkürlich aus einer Arbeitsstellung in eine Ruhestellung verstellbar ist, nach der Gattung des Hauptanspruches. Bei Nichtgebrauch stört in der Regel diese über das Fahrzeugheck herausragende Kugelstange, vor allem beim Rangieren auf engem Raum, z. B. beim Einparken.
Es sind daher Anhängevorrichtungen bekannt, deren Kugelstange demontierbar ist. Diese Vorrichtungen haben den Nachteil, dass die Kugelstange im Fahrzeuginneren mitgeführt werden muss oder, sofern sie deswegen nicht beim Fahrzeug verbleibt, nicht unmittelbar zur Verfügung steht.
Bei einer bekannten Anhängerkupplung der gattungsgemäßen Art (US-PS 2544185) ist der Querbolzen in einer im Kupplungsträger angeordneten Gewindebohrung eingeschraubt und wird zur Verriegelung der Kugelstange im Gewinde hereingedreht, bis das vordere Ende des Querbolzens auf den Boden der Ausnehmung stößt. Zum Entriegelung wird der Querbolzen wieder herausgeschraubt bis er aus der Ausnehmung taucht wonach die Kupplungsstange verdreht und verschoben werden kann. In der Ruhelage wird dann durch denselben Querbolzen und Eingreifen in einer entsprechend an anderer Stelle angeordneten Ausnehmung die Kupplungsstange wieder verriegelt. Diese bekannte Einrichtung hat den Nachteil, dass sich der Bolzen aufgrund der natürlichen Erschütterungen eines Kraftfahrzeuges lockern kann und selbsttätig herausschrauben kann, wobei dieses von Hause aus herausschrauben unterstützt wird durch den Konus am freien Ende des Querbolzens, der mit einem entsprechenden Konusband der Ausnehmung zusammenwirkt. Sobald aufgrund ihrer Arbeitsfunktion an der Kugelstange in Richtung der Achse der Kugelstange wirkende Kräfte angreifen, entstehen auch aufgrund der Koni in Achsrichtung des Querbolzens, und zwar radial nach außen wirkende Kräfte, die in Verbindung mit der Gewindesteigung des Querbolzensgewinde und den Fahrzeugerschütterungen ein Herausdrehen des Querbolzens bewirken. Außerdem ist es eine nicht unerhebliche Geduldsprobe, bei Verstellen der Kupplung aus der Ruhestellung in die Arbeitsstellung und umgekehrt jeweils die Ausnehmung mit dem Querbolzen zu treffen, bzw. den Querbolzen herein- oder herauszuschrauben. Es ist zwar bekannt, bei einer Anhängerkupplung einen Querbolzen zu verwenden, der entgegen der Kraft einer Feder herausziehbar ist und der Verriegelung einer verschwenkbaren Anhängerkupplung in Arbeitsstellung bzw. Ruhestellung dient (GB-PS 1504643). Der Nachteil dieser bekannten Kupplung besteht allerdings darin, dass sie nicht nur konstruktiv äußerst aufwendig ist, sondern dass die Zuglast dieser Anhängerkupplung über einen quer zur Fahrtrichtung angeordneten, relativ dünnen Bolzen erfolgt, um den auch das die Kugel der Anhängerkupplung tragende Teil verdrehbar ist. Ein weiterer Nachteil dieser Anhängerkupplung besteht darin, dass aufgrund der verdrehbaren Lagerung auf einem Bolzen und in Zugrichtung gesehen dem Versatz dieses Bolzens zum Angriffspunkt an der Kugel je nach Zugkraft erhebliche Hebelkräfte entstehen, die sich als Scherkräfte am Querbolzen auswirken. Derartige einfache gegen Feder verschiebbare Verriegelungen sind natürlich in der Technik vielfältig bekannt, angefangen bei der Höhenverstellung eines Stuhles bis zu der Anwendung bei Werkzeugmaschinen, beispielsweise Tischkreissägen mit drehbarer Arbeitsplatte. Ein zusätzlicher Nachteil dieser bekannten Kupplung besteht auch darin, dass mindestens zwei derartige Querbolzen vorgesehen werden müssen, um eine Querverspannung des verdrehbaren Teils im Kupplungsträger zu vermeiden. Dieses führt nicht nur zu erheblichen Mehrkosten, sondern vor allem zu einem Handlingproblem, weil beide Querbolzen gleichzeitig herausgezogen werden müssen und der betätigenden Person die dritte Hand fehlt, um die Verdrehung des verdrehbaren Teiles vorzunehmen.

### Die Erfindung und ihre Vorteile

Die erfindungsgemäße Anhängerkupplung für Kraftfahrzeuge mit den kennzeichnenden Merkmalen des Hauptanspruchs hat demgegenüber den Vorteil, dass sie eine technisch wenig aufwendige und daher wirtschaftlich herstellbare Lösung darstellt. Wegen ihrer einfachen Handbedienung ist man zudem weder bei der Montage noch beim späteren Betrieb auf eine Energiequelle angewiesen, noch auf Schraubarbeiten Von Vorteil ist auch der geringe Platzbedarf. Ein sich selbständiges Lösen der Verriegelung ist ausgeschlossen.

Nach einer vorteilhaften Ausgestaltung der Erfindung weist der Schaft der Kugelstange in an sich bekannter Weise (US-PS 2544185) einen gleichbleibenden Querschnitt auf. Damit wird eine einfache kraft- und formschlüssige Anordnung zwischen Kugelstange und Kupplungsträger möglich und auch eine einfache Verstellung der Kugelstange bei Nichtbenutzung aus der Arbeitsstellung in die Ruhestellung, also aus dem Stoßbereich der Stoßstange vorzunehmen. Bei Verwendung eines doppelt achsensymmetrischen, insbesondere eines quadratischen Querschnitts für den Schaft der Kugelstange ergibt sich darüber hinaus der Vorteil, dass die Kugelstange bei Nichtgebrauch aus dem Kupplungsträger herausgezogen, um 90° verdreht, also mit der Kugel zur Seite weisend, in den Kupplungsträger eingeschoben und außerhalb des Stoßbereichs der Stoßstange verriegelt werden kann.

Nach einer zusätzlichen vorteilhaften Ausgestaltung der Erfindung ist die Kugelstange in entriegeltem Zustand um ihre eigene Achse verdrehbar, indem in ebenfalls an sich bekannter Weise ein kreisrunder Querschnitt für den Schaft der Kugelstange verwendet wird. Damit wird es möglich, dass gekröpfte Ende der Kugelstange aus seiner aufrechten Position um 90° zu verdrehen, ohne die Kugelstange aus dem Kupplungsträger entfernen zu müssen, und um sie anschließend unter die Stoßstange oder das Fahrzeugheck zu schieben und dort im Kupplungsträger wieder zu verriegeln.

Nach einer weiteren vorteilhaften Ausgestaltung der Erfindung besteht die Ausnehmung in der Kugelstange in einer Bohrung insbesondere einer Sackbohrung mit konischem Einlauf.

Nach einer zusätzlichen vorteilhaften Ausgestaltung der Erfindung ist der Querbolzen in Arbeitsstellung gegen axiales Verstellen im Kupplungsträger und/oder in der Ausnehmung arretierbar. Hierbei ist denkbar, dass am Querbolzen nach weiterer Ausgestaltung der Erfindung ein Gewinde für eine solche axiale Arretierung vorgesehen ist. Erfindungsgemäß soll eine solche zusätzliche Verriegelung in einfachster Weise lösbar sein, so dass ein schnelles und problemloses Verstellen gegeben ist.

Nach einer weiteren vorteilhaften Ausgestaltung der Erfindung ist der Querbolzen gestuft ausgebildet mit einem Konus an einer Stufe. Dieser Konus wirkt zusammen mit einer konischen Fläche der Ausnehmung in der Kugelstange, so dass sich eine Keilwirkung ergibt.

Nach einer zusätzlichen vorteilhaften Ausgestaltung der Erfindung ist in an sich bekannter Weise am Schaft der Kugelstange eine zweite in Ruhlage mit dem Querbolzen korrespondierende Ausnehmung vorhanden.

Weitergehende zusätzliche Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und im folgenden näher beschrieben. Es zeigen:
- Fig. 1: eine Anhängerkupplung für Kraftfahrzeuge in Betriebsposition,
- Fig. 2: eine Anhängerkupplung in Ruheposition,
- Fig. 3: einen Schnitt durch den Kupplungsträger quer zur Achse der Kugelstange und in Höhe des Querbolzens bzw. der Ausnehmung in der Kugelstange.

### Beschreibung des Ausführungsbeispiels

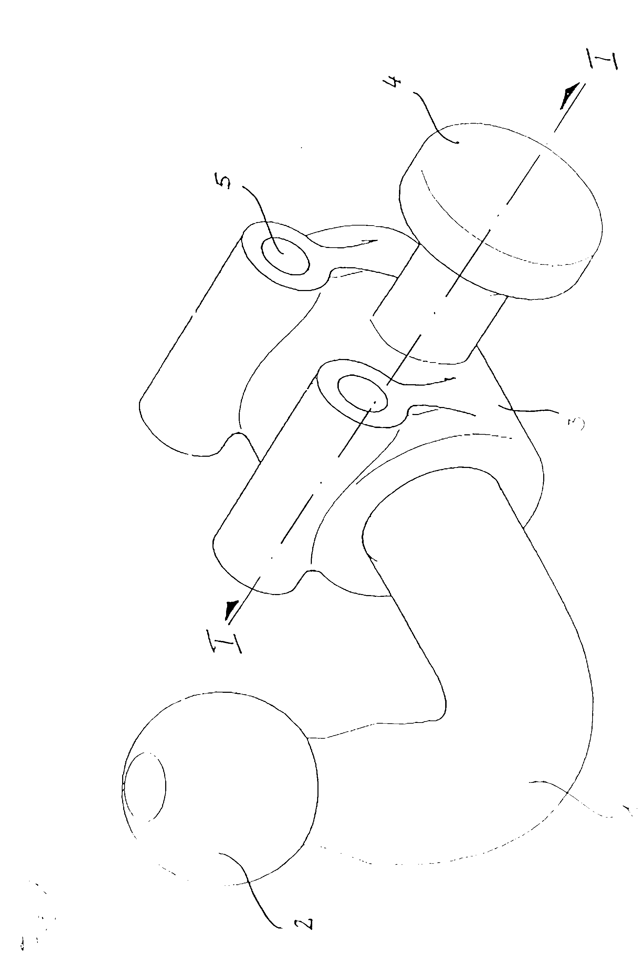

In Fig. 1 ist eine Ausführungsform der erfindungsgemäßen Anhängerkupplung für Kraftfahrzeuge dargestellt, die fast alle beanspruchten Merkmale in Kombination darstellt. Fig. 1 zeigt eine Kupplung in Betriebsposition. Sie besteht im wesentlichen aus einer Kugelstange 1, deren abgekröpftes Ende eine Kugel 2 trägt, und deren Schaft von einem Kupplungsträger 3 gehalten wird. Über das Handgriff 4 wird ein dort nicht sichtbarer Querbolzen bedient, der in die ebenfalls nicht sichtbare Ausnehmung der Kugelstange 1 eingreift. Über die Befestigungen 5 ist der Kupplungsträger 3 mit dem Fahrzeug fest verbunden.

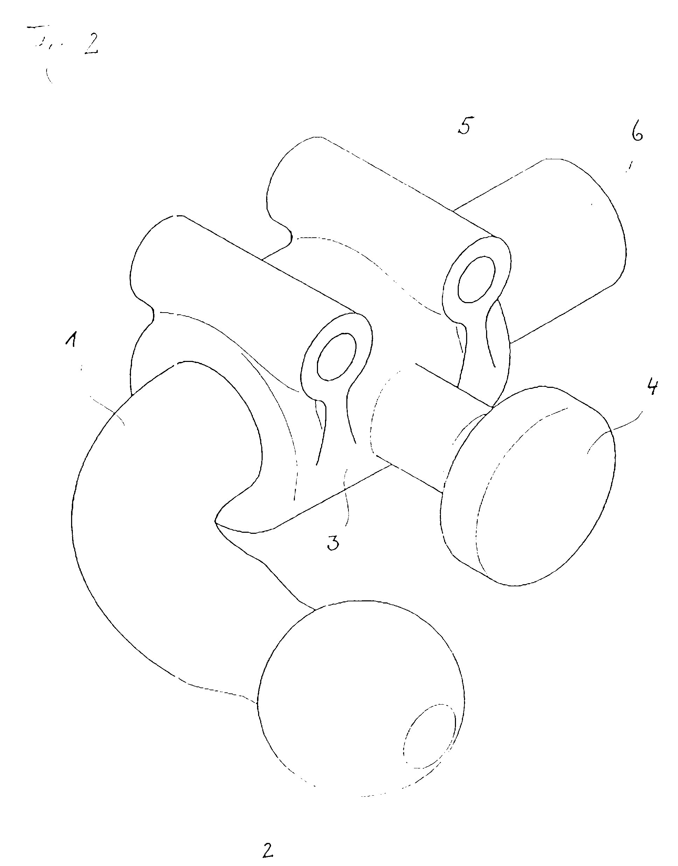

In Fig. 2 ist die Ruheposition der Anhängekupplung dargestellt. Dazu ist das gekröpfte Ende der Kugelstange 1 um 90° verdreht und die Kugelstange in Fahrtrichtung nach vorne geschoben. Dadurch wird ein Teil des Schaftes 6 der Kugelstange sichtbar, der in der Betriebsposition im Kupplungsträger 3 gelegen hatte.

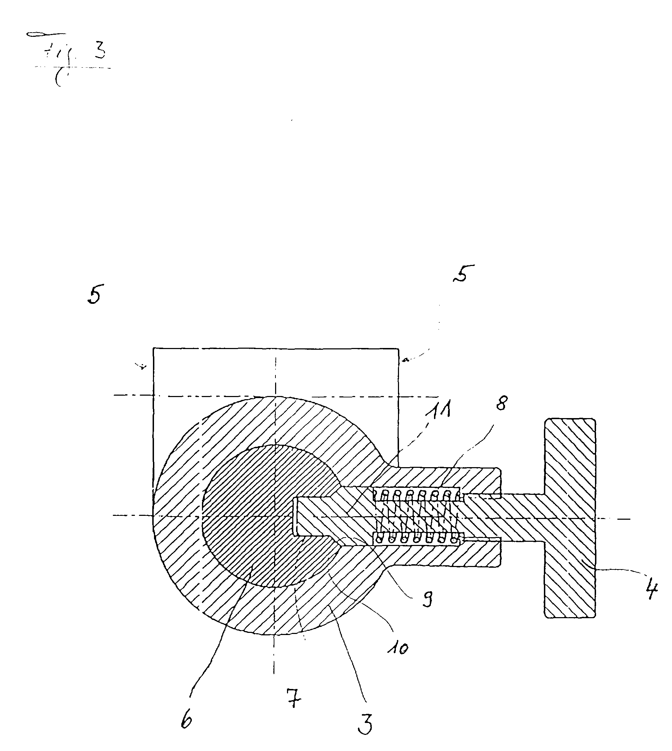

Fig. 3 zeigt einen Schnitt entlang der Linie I - I in Fig. 1. Dargestellt ist die Verriegelungssituation, in der der Querbolzen 11 durch Druck der Feder 8 in die Ausnehmung 7 des Schaftes 6 eingeschoben wird, so daß auf der konischen Aufweitung 10 des Schaftes 6 die konische Fläche 9 des Querbolzens 11 zu liegen kommt. Zum Lösen der Verriegelung wird der Querbolzen 11 am Handgriff 4 gegen die Kraft der Feder 8 radial zur Kugelstange 1 nach außen aus der Ausnehmung 7 gezogen, so daß die Kugelstange 1 verdreht und/oder verschoben werden kann, und der Querbolzen 11 in eine weiteren nicht dargestellten Ausnehmung eingerastet werden kann.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Kugelstange
- 2: Kugel
- 3: Kupplungsträger
- 4: Handgriff
- 5: Befestigung
- 6: Schaft
- 7: Ausnehmung
- 8: Feder
- 9: Konische Fläche des Querbolzens
- 10: Konische Aufweitung
- 11: Querbolzen

## Patentansprüche

1. Anhängerkupplung für Kraftfahrzeuge
- mit einer einen Schaft (6) aufweisenden, aus einer Arbeitsstellung in eine Ruhestellung verschiebbaren, eine Kupplungskugel (2) odgl. aufweisenden und am freien Ende gekröpften Kugelstange (1),
- mit einem den Schaft (6) der Kugelstange (1) aufnehmenden und mit dem Kraftfahrzeug verbundenen Kupplungsträger (3),
- mit einer die Kugelstange (1) in Arbeitsstellung im Kupplungsträger verankernden Verriegelungseinrichtung und
- mit einem quer zum Schaft (6) der Kupplungsstange (1) angeordneten, axial verstellbaren Querbolzen (11) der Verriegelungsvorrichtung, welcher zur Verriegelung in Arbeitsstellung in eine im Schaft (6) der Kugelstange (1) radial angeordnete Ausnehmung (7) greift und zur Verstellung der Kugelstange (1) in deren Ruhestellung entriegelnd aus dieser Ausnehmung (7) verstellbar ist,
**dadurch gekennzeichnet**,
- dass der Querbolzen (11) in einer ihn führenden im Kupplungsträger (3) angeordneten Querbohrung achsial verschiebbar ist,
- dass der Querbolzen (11) in Richtung Kugelstange (1) bzw. Ausnehmung (7) durch eine Feder (8) belastet ist und
- dass am freien Ende des Querbolzens (11) ein Handgriff (4) vorgesehen ist, um zur Entriegelung den Querbolzen (11) entgegen der Kraft der Feder (8) aus der Ausnehmung (7) zu ziehen.

2. Anhängerkupplung nach Anspruch 1 oder 2, **dadurch gekennzeichnet, dass** die Kugelstange (1) über die Länge ihres Schaftes (6) einen im wesentlichen gleichbleibenden Querschnitt aufweist.

3. Anhängerkupplung nach Anspruch 1 oder 2, **dadurch gekennzeichnet, dass** die Kugelstange (1) in entriegeltem Zustand um ihre eigene Achse verdrehbar ausgebildet ist.

4. Anhängerkupplung nach einem der vorhergehenden Ansprüche, **dadurch gekennzeichnet, dass** als Ausnehmung (7)' in der Kugelstange eine Bohrung, insbesondere Sackbohrung dient, mit konischem Einlauf.

5. Anhängerkupplung nach einem der vorhergehenden Ansprüche, **dadurch gekennzeichnet, dass** der Querbolzen (11) in Arbeitsstellung gegen axiales Verstellen im Kupplungsträger (3) und/oder in der Ausnehmung (7) arretierbar ist.

6. Anhängerkupplung nach Anspruch 5, **dadurch gekennzeichnet, dass** am Querbolzen (11) ein Gewinde für die axiale Arretierung vorgesehen ist.

7. Anhängerkupplung nach einem der vorhergehenden Ansprüche, **dadurch gekennzeichnet, dass** der Querbolze (11) gestuft ausgeführt ist, mit konischer Fläche (9) an einer Stufe, die mit einem Gegenkonus (10) in der Ausnehmung (7) korrespondiert.

8. Anhängerkupplung nach einem der vorhergehenden Ansprüche, **dadurch gekennzeichnet, dass** am Schaft der Kugelstange eine zweite, in Ruhelage mit dem Querbolzen korrespondierende, Ausnehmung vorhanden ist.
